# EUROPÄISCHE PATENTANMELDUNG

(11) **EP 1 271 015 A1**
(43) Veröffentlichungstag der Anmeldung: **02.01.2003**
(21) Anmeldenummer: 02008600.5
(22) Anmeldetag: 17.04.2002
(51) Int. Cl.: F16J 15/08

(54) **Flachdichtung**

(30) Priorität: 22.06.2001 DE 10130325
(71) Anmelder: Federal-Mogul Sealing Systems GmbH, 57562 Herdorf (DE)
(72) Erfinder: Schmitt, Klaus, Dipl.-Ing., 57529 Grünebach (DE)

(57) **Zusammenfassung**

Ein- oder mehrlagige Flachdichtung (1,1'), insbesondere Zylinderkopfdichtung, die mit mindestens einer Durchgangsöffnung (3) versehen ist und im Bereich der Durchgangsöffnung (3) mindestens eine im wesentlichen umlaufende Sicke (4,4',4'') aufweist, wobei im Bereich der Sicke (4,4',4'') mindestens ein formgeprägter Metallkörper (5,5') vorgesehen ist, der mindestens einen vertieften Bereich (17,16) aufweist, in dessen Ebene die Sicke (4,4',4'') angeordnet ist.

## Beschreibung

Die Erfindung betrifft eine ein- oder mehrlagige Flachdichtung, insbesondere Zylinderkopfdichtung, die mit mindestens einer Durchgangsöffnung versehen ist und im Bereich der Durchgangsöffnung mindestens eine im wesentlichen umlaufende Sicke aufweist.

Die DE-A 195 48 237 betrifft eine metallische Flachdichtung, insbesondere Zylinderkopfdichtung, bestehend aus zwei Deckblechen und mindestens je einer eine Brennraumöffnung umgebenden Sicke sowie einer zwischen den Deckblechen angeordneten Distanzlage, deren freier Endbereich zur Erzielung einer definierten Flächenpressung axial dicker, als der übrige Bereich ausgebildet ist und die Sicken sich symmetrisch zueinander mit ihren konvexen Aufwölbungen in Richtung der Distanzlage erstrecken, wobei die Distanzlage im Bereich einer konvexen Aufwölbung eine Ausnehmung zur Aufnahme der Sicken beinhaltet. Bei Bedarf kann die axiale Verdickung des Endbereiches der Distanzlage durch Aufbringen ringförmiger Auflagen erzeugt werden.

Die DE-C 197 19 328 beschreibt eine metallische Zylinderkopfdichtung mit wenigstens einem Deckblech und einem Beilageblech, die übereinander angeordnet und mit einer oder mehreren nebeneinander angeordneten Öffnungen versehen sind, wobei in dem wenigstens einen Deckblech um jede Öffnung herum mit Abstand und zu dieser unter Belastung eines geraden Blechabschnitts im Öffnungsbereich eine zum Trägerblech weisende Sicke vorgesehen ist, die durch einen äußeren und einen inneren Verformungsbegrenzer geschützt ist. Das Beilageblech endet außerhalb des Bereiches der jeweiligen Sicke. Zur Bildung des äußeren Verformungsbegrenzers ist eine Überlappung mit einem den inneren Verformungsbegrenzer tragenden Ring vorgesehen. lm Stand der Technik sind bereits Verformungsbegrenzer bekannt, wobei Art und Umfang der Erzeugung als aufwendig angesehen werden und zur Einstellung unterschiedlicher Stopperhöhen im Bereich der Brennraumabdichtung ein aufwendiger und kostenintensiver Fertigungsablauf vorgehalten werden muß.

Der Erfindung liegt die Aufgabe zugrunde, eine im gattungsbildenden Teil des ersten Patentanspruches beschriebene ein- oder mehrlagige Flachdichtung dahingehend weiterzubilden, daß derartige Flachdichtung, insbesondere Zylinderkopfdichtungen, mit unterschiedlichen Stopperhöhen im Bereich der Brennraumabdichtung mit geringstmöglichem Aufwand erzeugt werden können.

Diese Aufgabe wird dadurch gelöst, daß im Bereich der Sicke mindestens ein formgeprägter Metallkörper vorgesehen ist, der mindestens einen vertieften Bereich aufweist, in dessen Ebene die Sicke angeordnet ist.

Vorteilhafte Weiterbildungen des Erfindungsgegenstandes sind den zugehörigen Unteransprüchen zu entnehmen.

Die erfindungsgemäße Flachdichtung, ist im Vergleich zum Stand der Technik, als konstruktiv vorteilhafter anzusehen und fertigungstechnisch einfacher herzustellen, wobei die Einstellung der unterschiedlichen Stopperhöhen unabhängig von der jeweiligen Blechdicke ist. Bei schmalen Zylinderstegen und dem dadurch erforderlichen Einsatz einer Sicke im Steg kann eine zusammenhängende Ringbrille alternativ zum einzelnen Metallring auf der jeweiligen Lage der Flachdichtung aufgebracht werden. Der als Metallring oder Metallbrille ausgebildete Metallkörper wird vorzugsweise auf der jeweiligen Lage (Funktions- oder Zwischenlage) aufgeschweißt oder aufgeklebt.

Der formgeprägte Metallkörper kann bedarfsweise ein- oder beidseitig der Zwischenlage vorgesehen werden, wobei unabhängig davon auch noch weitere Funktionslagen der Zwischenlage zugeordnet werden können. Desweiteren kann eine Topographie über dem Umfang der unterschiedlichen Höhen geprägt werden.

Darüber hinaus kann auch eine Zwischenlage formgeprägt werden, wobei einseitig eine Ausnehmung gebildet wird, die zur Aufnahme des formgeprägten Ringes, respektive der formgeprägten Metallbrille dient. Im Verlauf des Formprägevorganges kann auf der, der Ausnehmung gegenüberliegenden Seite der Zwischenlage ebenfalls eine Profilierung eingebracht werden. Selbige beinhaltet vorteilhafterweise zwei erhabene Bereiche, die mit entsprechendem Abstand zueinander vorgesehen sind.

Somit werden beidseitig einer Zwischenlage Bereiche gebildet, in welche Sicken zweier Funktionslagen, zumindest partiell eingebracht werden können, wobei die Breiten dieser Bereiche größer sind, als diejenigen der Sicken.

Infolge der unterschiedlich einstellbaren Höhen des Metallringes, respektive der Metallringbrille, lassen sich die Pressungen auf Grund berechneter zulässiger Materialbeanspruchungen in diesen Bereichen der Brennkraftmaschine reduzieren sowie die für die Sicken ertragbaren Schwingungsamplituden bestimmen.

Der Erfindungsgegenstand ist anhand eines Ausführungsbeispieles in der Zeichnung dargestellt und wird wie folgt beschrieben. Es zeigen
- Figur 1: Einlagige Flachdichtung, insbesondere Zylinderkopfdichtung, mit aufgebrachtem formgeprägtem Metallring
- Figur 2: Mehrlagige Flachdichtung, insbesondere Zylinderkopfdichtung, beinhaltend einen formgeprägten Metallring

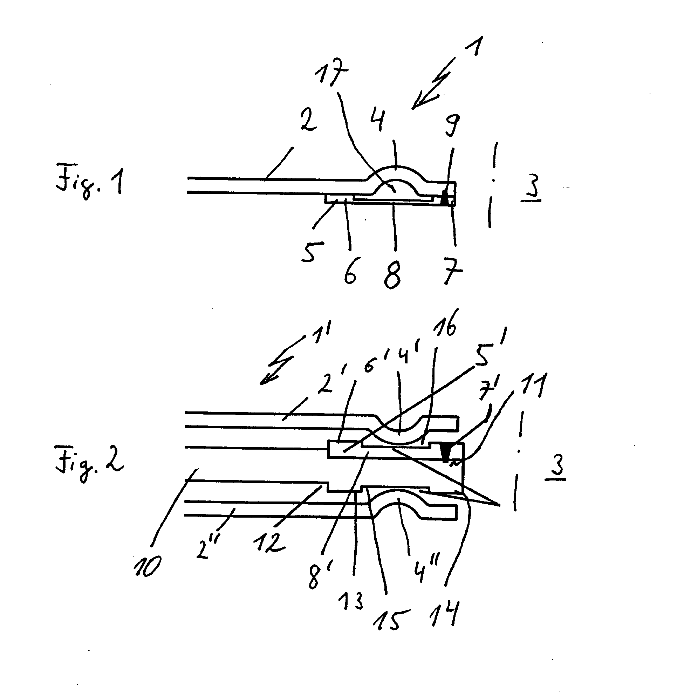

Figur 1 zeigt eine einlagige Flachdichtung, insbesondere Zylinderkopfdichtung 1, gebildet durch eine Funktionslage 2, die im Bereich einer Durchgangsöffnung 3 mit einer umlaufenden Sicke 4 versehen ist. Unterhalb der Sicke 4 ist ein formgeprägter Metallring 5 vorgesehen, der zwei verdickte Bereiche 6,7 aufweist, zwischen denen sich ein dünner Steg 8 erstreckt. Einseitig, d.h. im Bereich der Durchgangsöffnung 3 ist der formgeprägte Metallring 5 mit der Funktionslage 2 über eine Schweißnaht 9 verbunden.

Diese Schweißnaht 9 kann beispielsweise durch Laserpunktschweißen aufgebracht sein. Die Sicke 4 ist im Bereich 17 zwischen den verdickten Bereichen 6,7 des formgeprägten Ringes 5 vorgesehen, wobei der Abstand zwischen den verdickten Bereich 6,7 größer ist, als die Breite der Sicke 4.
Figur 2 zeigt eine mehrlagige Flachdichtung, insbesondere Zylinderkopfdichtung, beinhaltend zwei Funktionslagen 2',2", sowie eine Zwischenlage 10. In diesem Beispiel beinhaltet die Zwischenlage 10 einen formgeprägten Bereich 11 in Form einer Ausnehmung, die zur Aufnahme des bereits in Figur 1 angesprochenen formgeprägten Ringes 5' vorgesehen ist. Auch hier weist der formgeprägte Ring 5' verdickte Bereiche 6',7' sowie einen dazwischen liegenden dünneren Steg 8' auf. Auf der der Ausnehmung 11 gegenüberliegenden Seite 12 wurden im Verlauf des Formprägevorganges der Zwischenlage 10 erhabene Bereiche 13, 14 unter Bildung einer Vertiefung 15 vorgesehen. Die Funktionslagen 2',2" sind analog zu Figur 1 mit Sicken 4',4" versehen, die einerseits in den vertieften Bereich 16 des formgeprägten Ringes 5' und andererseits in die Vertiefung 15 zwischen den erhabenen Bereichen 13,14 der Zwischenlage 10 zumindest partiell eingreifen. Auch hier sind die Abstände zwischen den verdickten Bereichen 6',7', respektive den erhabenen Bereichen 13,14 größer als die Breite der zugeordneten Sicken 4',4" ausgebildet.

## Patentansprüche

1. Ein- oder mehrlagige Flachdichtung, insbesondere Zylinderkopfdichtung (1,1'), die mit mindestens einer Durchgangsöffnung (3) versehen ist und im Bereich der Durchgangsöffnung (3) mindestens eine im wesentlichen umlaufende Sicke (4',4") aufweist, **dadurch gekennzeichnet, daß** im Bereich der Sicke (4,4') mindestens ein formgeprägter Metallkörper (5,5') vorgesehen ist, der mindestens einen vertieften Bereich (17,16) aufweist, in dessen Ebene die Sicke (4,4') angeordnet ist.

2. Flachdichtung nach Anspruch 1, **dadurch gekennzeichnet, daß** der Metallkörper (5,5'), insbesondere durch Schweißen, mit einer der Lagen (2,10) der Flachdichtung verbunden ist.

3. Flachdichtung nach Anspruch 1 oder 2, **dadurch gekennzeichnet, daß** die einen Teil einer Funktionslage (2) bildende Sicke (4) auf dem vertieften Bereich (17) des Metallkörpers (5) aufliegt und im Bereich der Durchgangsöffnung (3) mit der Funktionslage (2), insbesondere durch Schweißen, verbunden ist.

4. Flachdichtung nach einem der Ansprüche 1 bis 3, **dadurch gekennzeichnet, daß** der Metallkörper (5') im Bereich einer formgeprägten Zwischenlage (10) eingebracht und im Bereich der Durchgangsöffnung (3) mit derselben, insbesondere durch Schweißen, verbunden ist, wobei die Sicke (4') zumindest partiell in den vertieften Bereich (16) des Metallkörpers (5') hineinragt.

5. Flachdichtung nach einem der Ansprüche 1 bis 4, **dadurch gekennzeichnet, daß** auf der dem formgeprägten und als Ausnehmung (11) ausgebildeten Bereich gegenüberliegenden Seite (12) der Zwischenlage (10) mindestens zwei erhabene Bereiche (13,14) angeformt sind, und daß in den zwischen den erhabenen Bereichen (13,14) gebildeten Raum (15) eine Sicke (4") einer weiteren Funktionslage (2') zumindest partiell eingreift.

6. Flachdichtung nach einem der Ansprüche 1 bis 5, **dadurch gekennzeichnet, daß** der Abstand der dickeren Bereiche (6,7,6',7') des Metallkörpers (5,5') größer als die Breite der korrespondierenden Sicke (4,4') ist.

7. Flachdichtung nach einem der Ansprüche 1 bis 6, **dadurch gekennzeichnet, daß** der Abstand zwischen den erhabenen Bereichen (13,14) größer als die Breite der korrespondierenden Sicke (4") ist.

8. Flachdichtung nach einem der Ansprüche 1 bis 7, **dadurch gekennzeichnet, daß** bei Vorhandensein mehrerer Durchgangsöffnungen (3) der Metallkörper (5,5') als zusammenhängende Ringbrille ausgebildet ist.

9. Flachdichtung nach einem der Ansprüche 1 bis 8, **dadurch gekennzeichnet, daß** der Metallkörper (5,5') ein Metallring ist.

10. Flachdichtung nach einem der Ansprüche 1 bis 9, **dadurch gekennzeichnet, daß** bei Vorhandensein mehrerer Durchgangsöffnungen (3) der Metallkörper (5,5') als zusammenhängende Metallbrille ausgebildet ist.
